# EUROPÄISCHE PATENTSCHRIFT

(11) **EP 0 663 192 B1**
(45) Veröffentlichungstag und Bekanntmachung des Hinweises auf die Patenterteilung: **10.06.1998**
(21) Anmeldenummer: 94117977.2
(22) Anmeldetag: 15.11.1994
(51) Int. Cl.: A61C 17/34

(54) **Elektrische Zahnbürste**
Electric toothbrush
Brosse à dents électrique

(30) Priorität: 17.12.1993 DE 4343103
(43) Veröffentlichungstag der Anmeldung: 19.07.1995
(73) Patentinhaber: Braun Aktiengesellschaft, Frankfurt am Main (DE)
(72) Erfinder: Herzog, Karl, D-60489 Frankfurt (DE)

(56) Entgegenhaltungen:
- US-A- 5 077 855

## Beschreibung

Die Erfindung betrifft eine elektrische Zahnbürste mit einem Bürstenteil, in dem eine drehbar gelagerte Nockenwelle untergebracht ist, und das eine Anzahl etwa quer zur Nockenwelle angeordneter und mit Borstenbüscheln versehene Borstenträger aufweist, die auf einer etwa parallel zur Nockenwelle angeordneten Lagerachse schwenkbar gelagert sind, und die von der Nockenwelle in eine Bewegung um die Lagerachse versetzbar sind.

Eine derartige elektrische Zahnbürste ist aus der US-A-5077855 bekannt. Dort kann ein Bürstenteil auf ein Griffteil der elektrischen Zahnbürste gesteckt werden. In dem Bürstenteil ist in Längsrichtung eine Nockenwelle untergebracht, die von einem im Griffteil enthaltenen Elektromotor in eine rotierende Bewegung versetzt werden kann. Des weiteren weist das Bürstenteil sechs Borstenträger auf, von denen jeder mit abstehenden Borstenbüscheln versehen ist. Die Borstenträger sind etwa quer zur Nockenwelle angeordnet, und die Borstenbüschel stehen etwa quer vom Bürstenteil ab. Die Borstenträger sind mit einer etwa mittig angeordneten Öffnung versehen, durch die eine Lagerachse hindurchgesteckt ist, die parallel zur Nockenwelle angeordnet ist. Die Lagerachse ist dabei in der mittleren Längsebene zwischen der Nockenwelle und den Borstenbüscheln angeordnet. Die Nockenwelle ist mit sechs Nocken versehen, die abwechselnd um 180 Grad versetzt sind. Wird die Nockenwelle in eine rotierende Bewegung versetzt` so hat dies zur Folge, daß die aufeinanderfolgenden Borstenträger mit den Borstenbüscheln jeweils gegenläufige, oszillierende Rotationsbewegungen um die Lagerachse ausführen. Setzt ein Benutzer die Borstenbüschel etwa rechtwinklig auf die zu reinigende Zahnoberfläche auf, so führen die Spitzen der Borstenbüschel eine im wesentlichen zur Zahnoberfläche etwa parallele Hin- und Herbewegung aus. Eine derartige nur wischende Bewegung der Borstenbüschel ist insbesondere für eine vollständige Entfernung von Plaque in vielen Fällen nicht ausreichend.

Aufgabe der Erfindung ist es, eine elektrische Zahnbürste zu schaffen, die eine verbesserte Entfernung von Plaque gewährleistet.

Diese Aufgabe ist erfindungsgemäß dadurch gelöst, daß bei einer elektrischen Zahnbürste der eingangs genannten Art die Lagerachse außerhalb einer gedachten, etwa parallel zu den Borstenbüscheln ausgerichteten und längs durch die Nockenwelle verlaufenden ersten Ebene angeordnet ist.

Entgegen dem beschriebenen Stand der Technik, bei dem die Borstenträger jeweils etwa mittig auf der Lagerachse gelagert sind, sind die Borstenträger nach der Erfindung außermittig gelagert. Dies hat zur Folge, daß die Spitzen der Borstenbüschel eine Bewegung ausführen, die zusätzlich zu einer parallelen und damit wischenden Komponente eine dazu rechtwinklige und damit stoßende Komponente aufweist. Diese stoßende Komponente ist bei denjenigen Borstenbüscheln am größten, die am weitesten von derjenigen Lagerachse entfernt angeordnet sind, auf der der Borstenträger gelagert ist. Setzt ein Benutzer die Borstenbüschel etwa rechtwinklig auf die zu reinigende Zahnoberfläche, so bewirkt die zusätzliche stoßende Bewegungskomponente der Borstenbüschel eine wesentlich höhere Reinigungswirkung an den Zähnen als bei einer nur wischenden Bewegungskomponente. Selbst festsitzende Verunreinigungen auf den Zahnoberflächen, wie Plaque, oder auch festsitzende Essensreste in den Zahnzwischenräumen, werden durch die stoßende Bewegungskomponente sicher abgelöst und beseitigt. Die Reinigungswirkung der erfindungsgemäßen Zahnbürste ist durch die stoßende Bewegungskomponente der Borstenbüschel somit wesentlich verbessert.

Bei einer vorteilhaften Ausgestaltung der Erfindung sind zwei Lagerachsen vorgesehen, die auf beiden Seiten der gedachten ersten Ebene angeordnet sind, wobei jeder der Borstenträger eine Öffnung zur Aufnahme einer Lagerachse aufweist. Auf diese Weise werden einseitige Bewegungen der Borstenträger vermieden, die durch die außermittige Anordnung einer einzigen Lagerachse hervorgerufen würden. Die Bewegungen der Borstenträger gleichen sich in ihrer Gesamtheit aus, so daß für einen Benutzer eine einfache und angenehme Handhabung der elektrischen Zahnbürste erreicht wird. Besonders zweckmäßig ist es, wenn die Borstenträger abwechselnd auf den beiden Lagerachsen gelagert sind.

Bei einer weiteren vorteilhaften Ausgestaltung der Erfindung sind die Lagerachsen in einer gedachten, etwa quer zu den Borstenbüscheln ausgerichteten und etwa parallel zur Nockenwelle verlaufenden zweiten Ebene angeordnet. Die Lagerachsen sind also nicht nur außermittig, sondern darüber hinaus in der gedachten zweiten Ebene auf beiden Seiten der Nockenwelle angeordnet. Dies hat zur Folge, daß die etwa rechtwinklig zur Zahnoberfläche verlaufende und damit stoßende Bewegungskomponente der Borstenbüschel besonders groß ist. Die Reinigungswirkung der erfindungsgemäßen Zahnbürste ist somit noch weiter verbessert.

Bei einer weiteren vorteilhaften Ausgestaltung der Erfindung sind die beiden Lagerachsen etwa parallel zueinander angeordnet und ist der Abstand der beiden Lagerachsen zu der gedachten ersten Ebene etwa gleich groß. Die Lagerachsen sind also etwa symmetrisch angeordnet. Damit wird erreicht, daß die gegenläufigen Bewegungen zweier aufeinanderfolgender Borstenträger einander entsprechen. Die außermittige Anordnung der Lagerachsen und die daraus resultierende stoßende Bewegung der Borstenträger führt somit im Hinblick auf die Gesamtheit aller Borstenträger zu keiner einseitigen Reinigungswirkung. Die verbesserte Reinigungswirkung der erfindungsgemäßen Zahnbürste wird auf diese Weise weiter erhöht.

Bei einer vorteilhaften Weiterbildung der Erfindung weist jeder der Borstenträger eine Aussparung im Bereich derjenigen Lagerachse auf, auf der er nicht gelagert ist, wobei die Aussparung derart ausgestaltet ist, daß der Borstenträger die durch die Nockenwelle hervorgerufene Bewegung ausführen kann, ohne dabei die genannte Lagerachse zu berühren. Jeder der Borstenträger weist somit eine Öffnung zur Aufnahme einer der beiden Lagerachsen auf sowie eine Aussparung im Bereich der anderen Lagerachse. Jeder Borstenträger kann somit von der Nockenwelle um die ihm zugeordnete Lagerachse geschwenkt werden, ohne dabei von der anderen Lagerachse daran gehindert zu werden.

Bei einer vorteilhaften Weiterbildung der Erfindung weist jeder der Borstenträger ein Langloch zur Aufnahme der Nockenwelle auf, wobei die Längsachse des Langloches etwa die geometrische Achse der jeweils zugehörigen Lagerachse schneidet. Mit Hilfe des Langloches wird erreicht, daß jeder der Borstenträger exakt von den Nocken der Nockenwelle geführt wird und dadurch die vorgesehene Bewegung ausführt. Es sind somit keine weiteren Bauteile erforderlich, um die erhöhte Reinigungswirkung der erfindungsgemäßen Zahnbürste zu erreichen.

Bei einer vorteilhaften Ausgestaltung der Erfindung sind die Borstenträger, unabhängig von ihrer Lagerung auf einer der beiden Lagerachsen, identisch ausgestaltet. Dies hat offensichtliche Vorteile insbesondere hinsichtlich der Kosten für die Herstellung der Borstenträger.

Bei einer weiteren vorteilhaften Ausgestaltung der Erfindung ist die Nockenwelle in eine oszillierende Rotationsbewegung versetzbar. Dies ist insbesondere dann zweckmäßig, wenn ein Griffteil verwendet werden soll, dessen Elektromotor eine derartige oszillierende Rotationsbewegung ausführt.

Besonders zweckmäßig ist es, wenn die Borstenträger mit unterschiedlichen Borstenbüscheln versehen sind. Auf diese Weise kann die Reinigungswirkung weiter verbessert werden.

Weitere Merkmale, Vorteile und Anwendungsmöglichkeiten der Erfindung ergeben sich aus den nachfolgenden Beschreibungen von Ausführungsbeispielen, die in der Zeichnung näher dargestellt sind.

Es zeigen
- Fig. 1: eine schematische Darstellung eines Bürstenteiles einer elektrischen Zahnbürste nach der Erfindung in einer Ansicht aus der Richtung I der Fig. 2,
- Fig. 2: eine schematische Schnittdarstellung des Bürstenteiles der Fig. 1 entlang der Ebene II-II der Fig. 1,
- Fig. 3 bzw. Fig. 4: eine schematische Schnittdarstellung des Bürstenteiles der Fig. 1 entlang der Ebene III-III bzw. IV-IV der Fig. 2.

Bei dem beschriebenen Ausführungsbeispiel setzt sich eine elektrische Zahnbürste aus einem Griffteil und einem Bürstenteil zusammen. In dem Griffteil ist ein Elektromotor untergebracht, der eine aus dem Griffteil herausragende Welle in eine kontinuierlich rotierende Bewegung versetzen kann. Das Bürstenteil ist auf das Griffteil aufgesteckt, so daß die Welle des Griffteiles in das Bürstenteil hineinragt.

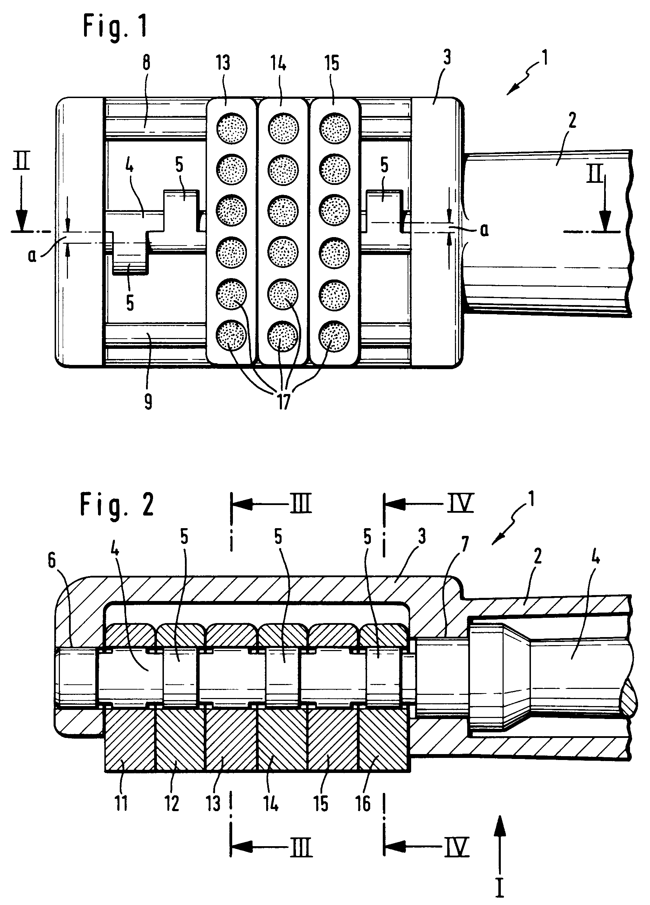

In den Fign. 1 bis 4 ist das freie Ende eines derartigen Bürstenteiles 1 dargestellt, das einen etwa zylindrischen oder konischen Schaft 2 und ein sich daran anschließendes wannenförmiges Mundstück 3 aufweist.

In dem Schaft 2 ist eine Nockenwelle 4 untergebracht, die mit der in das Bürstenteil 1 hineinragenden Welle des Griffteiles drehfest gekoppelt ist, und die mit ihrem freien Ende in das Mundstück 3 hineinragt. Im Bereich des Mundstücks 3 ist die Nockenwelle 4 mit sechs in Längsrichtung aufeinanderfolgenden Nocken 5 von kreisrundem Querschnitt versehen, von denen jeweils zwei benachbarte Nocken 5 um 180 Grad versetzt zueinander angeordnet sind. Die Exzentrizität der Nocken 5 ist in den Fign. 1, 3 und 4 mit Hilfe der Strecke a dargestellt. Die um 180 Grad zueinander versetzte Anordnung der Nocken 5 ergibt sich insbesondere aus der Fig. 1.

Die Nockenwelle 4 ist mit Hilfe von Lagern 6, 7 drehbar in den Stirnwänden des Mundstücks 3 gelagert. Dies ist insbesondere aus der Fig. 2 ersichtlich. Wird die von dem Elektromotor angetriebene Welle in eine rotierende Bewegung versetzt, so führt aufgrund der drehfesten Kopplung auch die Nockenwelle 4 eine rotierende Bewegung aus.

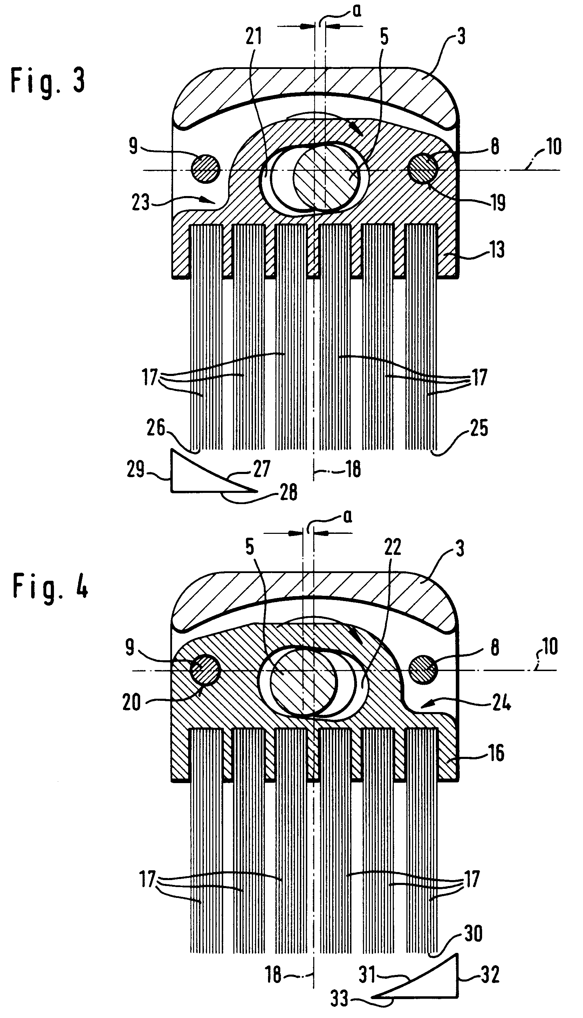

Parallel zur Nockenwelle 4 sind zwei Lagerachsen 8, 9 mit ihren freien Enden in den Stirnwänden des Mundstücks 3 gehalten. Der Abstand der Lagerachsen 8, 9 von der Nockenwelle 4 ist gleich groß. Wie insbesondere in den Fign. 3 und 4 dargestellt ist, sind die beiden Lagerachsen 8, 9 auf beiden Seiten der Nockenwelle 4 in einer gedachten, gemeinsamen Ebene 10 angeordnet.

In den Innenraum des Mundstücks 3 sind sechs Borstenträger 11, 12, 13, 14, 15, 16 eingebracht, die identisch ausgestaltet sind. Dies ergibt sich insbesondere aus den Fign. 3 und 4.

Wie aus den Fign. 1 bis 4 ersichtlich ist, sind die Borstenträger 11, 12, 13, 14, 15, 16 in der Form von ebenen, flächigen Bauteilen mit geringer Dicke ausgebildet. Sie sind quer zur Nockenwelle 4 angeordnet und erstrecken sich über die Breite des Innenraumes des Mundstücks 3. Jeder der Borstenträger 11, 12, 13, 14, 15, 16 ist mit einer Anzahl von Borstenbüscheln 17 versehen, die etwa parallel zu einer gedachten, längs der Nockenwelle 4 verlaufende Ebene 18 und etwa quer zu der von den Lagerachsen 8, 9 gebildeten Ebene 10 angeordnet sind. Die Borstenbüschel 17 ragen aus dem Innenraum des Mundstücks 3 heraus und können dadurch von einem Benutzer etwa rechtwinklig auf die zu reinigende Zahnoberfläche aufgesetzt werden.

Gemäß den Fign. 3 und 4 weist jeder der Borstenträger 11, 12, 13, 14, 15, 16 eine Öffnung 19, 20 auf zur Aufnahme von einer der beiden Lagerachsen 8, 9. Die Borstenträger 11, 12, 13, 14, 15, 16 sind abwechselnd den beiden Lagerachsen 8, 9 zugeordnet. Dadurch sind die Borstenträger 11, 13, 15 auf der Lagerachse 8 gelagert und die Borstenträger 12, 14, 16 auf der Lagerachse 9.

Etwa mittig weist jeder der Borstenträger 11, 12, 13, 14, 15, 16 ein Langloch 21, 22 auf, dessen Längsachse die geometrische Achse der jeweils zugehörigen Lagerachse 8, 9 schneidet. Das Langloch 21, 22 ist derart ausgestaltet, daß jeweils einer der Nocken 5 der Nockenwelle 4 darin aufgenommen werden kann. Dies ist insbesondere aus den Fign. 3 und 4 ersichtlich. Des weiteren sind die Länge der Nocken 5 und die Dicke der Borstenträger 11, 12, 13, 14, 15, 16 derart aufeinander abgestimmt, daß jeder der Borstenträger 11, 12, 13, 14, 15, 16 genau einem der Nocken 5 entspricht. Dies ergibt sich insbesondere aus der Fig. 2.

Im Bereich derjenigen Lagerachse 8, 9, auf der einer der Borstenträger 11, 12, 13, 14, 15, 16 nicht gelagert ist, weist der jeweilige Borstenträger 11, 12, 13, 14, 15, 16 eine Aussparung 23, 24 auf. Diese Aussparung 23, 24 ist derart ausgebildet, daß die genannte Lagerachse 8, 9 nicht mit dem Borstenträger 11, 12, 13, 14, 15, 16 in Berührung kommen kann. Dies ergibt sich beispielsweise aus der Fig. 4, in der der Borstenträger 16 eine Aussparung 24 aufweist, die derart ausgebildet ist, daß die Lagerachse 8 nicht mit dem Borstenträger 16 in Berührung kommen kann.

Wird die Nockenwelle 4 mit Hilfe des in dem Griffteil der elektrischen Zahnbürste untergebrachten Elektromotors in eine rotierende Bewegung versetzt, so wirken die Nocken 5 der Nockenwelle 4 auf die Borstenträger 11, 12, 13, 14, 15, 16 ein und erzeugen eine nachfolgend näher beschriebene Bewegung der Borstenträger 11, 12, 13, 14, 15, 16. Aufgrund der identischen Ausgestaltung der Borstenträger 11, 12, 13, 14, 15, 16 ist diese Bewegung als solche bei allen Borstenträgern 11, 12, 13, 14, 15, 16 gleich. Die um 180 Grad versetzte Anordnung der Nocken 5 auf der Nockenwelle 4 bewirkt, daß die genannte Bewegung bei jeweils zwei benachbarten Borstenträgern 11, 12, 13, 14, 15, 16 um etwa 180 Grad versetzt ist. Aufgrund der abwechselnden Lagerung der Borstenträger 11, 12, 13, 14, 15, 16 auf den Lagerachsen 8, 9 ist die genannte Bewegung bei jeweils zwei benachbarten Borstenträgern 11, 12, 13, 14, 15, 16 entgegengesetzt, wie noch erläutert werden wird.

Die genannte, von den Nocken 5 der Nockenwelle 4 erzeugte Bewegung der Borstenträger 11, 12, 13, 14, 15, 16 ist nachfolgend anhand der Fig. 3 und des dort dargestellten Borstenträgers 13 erläutert. In der Fig. 3 sind die Spitzen desjenigen Borstenbüschels 17 mit der Bezugsziffer 25 gekennzeichnet, die der Lagerachse 8 am nächsten sind, wohingegen die Spitzen desjenigen Borstenbüschels 17 mit der Bezugsziffer 26 gekennzeichnet sind, die von der Lagerachse 8 am weitesten entfernt sind. Es versteht sich, daß die nachfolgende Beschreibung in gleicher Weise auch für die Bewegung der entsprechend angetriebenen Borstenträger 11, 15 zutrifft.

In der Fig. 3 ist die rotierende Bewegung der Nockenwelle 4 durch einen Pfeil angegeben. Bei einer derartigen rotierenden Bewegung der Nockenwelle 4 führen die Spitzen 25 aufgrund der naheliegenden Lagerung des Borstenträgers 13 auf der Lagerachse 8 eine im wesentlichen quer zu den Borstenbüscheln 17 verlaufende Hin- und Herbewegung aus. Werden die Borstenbüschel 17 von einem Benutzer etwa rechtwinklig auf die Zahnoberfläche aufgesetzt, so stellt diese Hin- und Herbewegung eine etwa parallel zur Zahnoberfläche verlaufende und im wesentlichen wischende Bewegung der Borstenbüschel 17 dar.

Die Spitzen 26 hingegen bewegen sich auf einem Kreisbogen, dessen Mittelpunkt im Mittelpunkt der Lagerachse 8 liegt. In der Fig. 3 ist diese Bewegung mit der Bezugsziffer 27 bezeichnet. Die Bewegung 27 kann in zwei rechtwinklig aufeinander stehende Bewegungskomponenten 28, 29 zerlegt werden. Werden die Borstenbüschel von einem Benutzer etwa rechtwinklig auf die Zahnoberfläche aufgesetzt, so stellt die etwa parallel zu den Borstenbüscheln 17 verlaufende Bewegungskomponente 29 eine etwa rechtwinklig zur Zahnoberfläche gerichtete, stoßende Bewegung der Borstenbüschel 17 dar. Die quer zu den Borstenbüscheln 17 verlaufende Bewegungskomponente 28 stellt eine wischende Bewegung der Borstenbüschel 17 auf der Zahnoberfläche dar.

Die Spitzen der anderen Borstenbüschel 17 des Borstenträgers 13 führen Bewegungen aus, deren Bewegungskomponenten zwischen denjenigen der Spitzen 25 und der Spitzen 26 der beiden äußeren Borstenbüschel 17 liegen. Die Spitzen aller Borstenbüschel 17 bewegen sich auf Kreisbögen, deren Mittelpunkt im Mittelpunkt der Lagerachse 8 liegt.

In der Fig. 4 ist der Borstenträger 16 gezeigt, der mittels der Öffnung 20 auf der Lagerachse 9 gelagert ist, und der von einem im Vergleich zum Borstenträger 13 der Fig. 3 um 180 Grad versetzten Nocken 5 der Nockenwelle 4 in Bewegung versetzt wird. Wird die Nockenwelle 4 in eine rotierende Bewegung versetzt, so bewegen sich die mit der Bezugsziffer 30 gekennzeichneten Spitzen der am weitesten von der Lagerachse 9 entfernten Borstenbüschel 17 auf einem Kreisbogen, dessen Mittelpunkt im Mittelpunkt der Lagerachse 9 liegt. In der Fig. 4 ist diese Bewegung mit der Bezugsziffer 31 bezeichnet. Die Bewegung 31 kann in zwei rechtwinklig aufeinander stehende Bewegungskomponenten 32, 33 zerlegt werden. Die Bewegungskomponente 32 wirkt stoßend auf die Zahnoberfläche. Die Bewegungskomponente 33 wischt über die Zahnoberfläche. Es versteht sich, daß die vorstehende Beschreibung in gleicher Weise auch für die Bewegung der entsprechend angetriebenen Borstenträger 12, 14 zutrifft.

Bei einer Abwandlung des beschriebenen Ausführungsbeispiels wird die Nockenwelle 4 nicht in eine kontinuierliche Rotation versetzt, sondern in eine oszillierende Rotation. Auch dabei weisen die Borstenträger 11, 13, 15 und die Borstenträger 12, 14, 16 abwechselnd eine zur Zahnoberfläche hin gerichtete stoßende Bewegungskomponente auf.

## Patentansprüche

1. Elektrische Zahnbürste mit einem Bürstenteil (1), in dem eine drehbar gelagerte Nockenwelle (4) untergebracht ist, und das eine Anzahl etwa quer zur Nockenwelle (4) angeordneter und mit Borstenbüscheln (17) versehene Borstenträger (11, 12, 13, 14, 15, 16) aufweist, die auf einer etwa parallel zur Nockenwelle (4) angeordneten Lagerachse (8, 9) schwenkbar gelagert sind, und die von der Nockenwelle (4) in eine Bewegung um die Lagerachse (8, 9) versetzbar sind, dadurch gekennzeichnet, daß die Lagerachse (8, 9) außerhalb einer gedachten, etwa parallel zu den Borstenbüscheln (17) ausgerichteten und längs durch die Nockenwelle (4) verlaufenden ersten Ebene (18) angeordnet ist.

2. Elektrische Zahnbürste nach Anspruch 1, dadurch gekennzeichnet, daß zwei Lagerachsen (8, 9) vorgesehen sind, die auf beiden Seiten der gedachten ersten Ebene (18) angeordnet sind, und daß jeder der Borstenträger (11, 12, 13, 14, 15, 16) eine Öffnung (19, 20) zur Aufnahme einer Lagerachse (8, 9) aufweist.

3. Elektrische Zahnbürste nach Anspruch 2, dadurch gekennzeichnet, daß die Lagerachsen (8, 9) in einer gedachten, etwa quer zu den Borstenbüscheln (17) ausgerichteten und etwa parallel zur Nockenwelle (4) verlaufenden zweiten Ebene (10) angeordnet sind.

4. Elektrische Zahnbürste nach Anspruch 2 oder 3, dadurch gekennzeichnet, daß die beiden Lagerachsen (8, 9) etwa parallel zueinander angeordnet sind, und daß der Abstand der beiden Lagerachsen (8, 9) zu der gedachten ersten Ebene (18) etwa gleich groß ist.

5. Elektrische Zahnbürste nach einem der Ansprüche 2 bis 4, dadurch gekennzeichnet, daß jeder der Borstenträger (11, 12, 13, 14, 15, 16) eine Aussparung (23, 24) im Bereich derjenigen Lagerachse (8, 9) aufweist, auf der er nicht gelagert ist, wobei die Aussparung (23, 24) derart ausgestaltet ist, daß der Borstenträger (11, 12, 13, 14, 15, 16) die durch die Nockenwelle (4) hervorgerufene Bewegung ausführen kann, ohne dabei die genannte Lagerachse (8, 9) zu berühren.

6. Elektrische Zahnbürste nach einem der Ansprüche 1 bis 5, dadurch gekennzeichnet, daß jeder der Borstenträger (11, 12, 13, 14, 15, 16) ein Langloch (21, 22) zur Aufnahme der Nockenwelle (4) aufweist, wobei die Längsachse des Langloches (21, 22) etwa die geometrische Achse der jeweils zugehörigen Lagerachse (8, 9) schneidet.

7. Elektrische Zahnbürste nach Anspruch 5 oder 6, dadurch gekennzeichnet, daß die Borstenträger (11, 12, 13, 14, 15, 16), unabhängig von ihrer Lagerung auf einer der beiden Lagerachsen (8, 9), identisch ausgestaltet sind.

8. Elektrische Zahnbürste nach einem der Ansprüche 1 bis 7, dadurch gekennzeichnet, daß die Nockenwelle (4) in eine oszillierende Rotationsbewegung versetzbar ist.

9. Elektrische Zahnbürste nach einem der Ansprüche 1 bis 8, dadurch gekennzeichnet, daß die Borstenträger (11, 12, 13, 14, 15, 16) mit unterschiedlichen Borstenbüscheln (17) versehen sind.

## Claims

1. An electric toothbrush with a brush unit (1) in which a camshaft (4) is rotatably received and which includes a series of bristle holders (11, 12, 13, 14, 15, 16) provided with tufts (17) of bristles and disposed approximately transversely relative to the camshaft (4), said bristle holders being pivotally mounted on a mounting pin (8, 9) which extends approximately parallel to the camshaft (4), and being movable in a motion about the mounting pin (8, 9) by the camshaft (4), **characterized in that** the mounting pin (8, 9) is disposed outside an imaginary first plane (18) aligned approximately parallel to the bristle tufts (17) and extending lengthwise through the camshaft (4).

2. An electric toothbrush as claimed in claim 1, **characterized in that** two mounting pins (8, 9) are provided, one on either side of the imaginary first plane (18), and that each of the bristle holders (11, 12, 13, 14, 15, 16) includes an opening (19, 20) for receiving a mounting pin (8, 9).

3. An electric toothbrush as claimed in claim 2, **characterized in that** the mounting pins (8, 9) are arranged in an imaginary second plane (10) aligned approximately transversely relative to the bristle tufts (17) and extending approximately parallel to the camshaft (4).

4. An electric toothbrush as claimed in claim 2 or claim 3, **characterized in that** the two mounting pins (8, 9) are approximately parallel to each other, and that the relative distances of the two mounting pins (8, 9) to the imaginary first plane (18) are approximately equal.

5. An electric toothbrush as claimed in any one of the claims 2 to 4, **characterized in that** each of the bristle holders (11, 12, 13, 14, 15, 16) has a recess (23, 24) in the area of the mounting pin (8, 9) on which it is not mounted, said recess (23, 24) being configured such as to enable the bristle holder (11, 12, 13, 14, 15, 16) to perform the motion produced by the camshaft (4), without making contact with said mounting pin (8, 9).

6. An electric toothbrush as claimed in any one of the claims 1 to 5, **characterized in that** each of the bristle holders (11, 12, 13, 14, 15, 16) includes an elongate hole (21, 22) for receiving the camshaft (4), with the longitudinal axis of the elongate hole (21, 22) intersecting approximately the geometric axis of the associated mounting pin (8, 9).

7. An electric toothbrush as claimed in claim 5 or claim 6, **characterized in that** the bristle holders (11, 12, 13, 14, 15, 16) are of identical configuration, irrespective of their mounting on one of the two mounting pins (8, 9).

8. An electric toothbrush as claimed in any one of the claims 1 to 7, **characterized in that** the camshaft (4) is adapted to perform an oscillating rotary motion.

9. An electric toothbrush as claimed in any one of the claims 1 to 8, **characterized in that** the bristle holders (11, 12, 13, 14, 15, 16) are provided with different tufts (17) of bristles.

## Revendications

1. Brosse à dents électrique comprenant une partie de brosse (1), dans laquelle est logé un arbre à cames (4) supporté de manière à pouvoir pivoter et qui présente un certain nombre de supports de poils (11, 12, 13, 14, 15, 16) qui sont agencés approximativement perpendiculairement à l'arbre à cames (4) et sont pourvus de faisceaux de poils (17) et qui sont supportés de manière à pouvoir pivoter sur un axe de support (8, 9) agencé approximativement parallèlement à l'arbre à cames (4) et peuvent être déplacés par l'arbre à cames (4) suivant un mouvement autour de l'axe de support (8, 9), caractérisée en ce que l'axe de support (8, 9) est agencé à l'extérieur d'un premier plan imaginaire (18) qui est orienté approximativement parallèlement aux faisceaux de poils (17) et qui s'étend en longueur à travers l'arbre à cames (4).

2. Brosse à dents électrique suivant la revendication 1, caractérisée en ce que deux axes de support (8, 9) sont prévus qui sont agencés de part et d'autre du premier plan imaginaire (18) et en ce que chacun des supports de poils (11, 12, 13, 14, 15, 16) présente une ouverture (19, 20) pour recevoir un axe de support (8, 9).

3. Brosse à dents électrique suivant la revendication 2, caractérisée en ce que les axes de support (8, 9) sont agencés dans un deuxième plan imaginaire (10) qui est orienté approximativement perpendiculairement aux faisceaux de poils (17) et qui s'étend approximativement parallèlement à l'arbre à cames (4).

4. Brosse à dents électrique suivant l'une des revendications 2 et 3, caractérisée en ce que les deux axes de support (8, 9) sont agencés approximativement parallèlement l'un à l'autre et en ce que la distance entre les deux axes de support (8, 9) et le premier plan imaginaire (18) est approximativement identiquement grande.

5. Brosse à dents électrique suivant l'une des revendications 2 à 4, caractérisée en ce que chacun des supports de poils (11, 12, 13, 14, 15, 16) présente un évidement (23, 24) dans la zone de l'axe de support (8, 9) sur lequel il n'est pas supporté, l'évidement (23, 24) étant conformé de façon que le support de poils (11, 12, 13, 14, 15, 16) puisse effectuer le mouvement engendré par l'arbre à cames (4), sans entrer en contact avec l'axe de support précité (8, 9).

6. Brosse à dents électrique suivant l'une des revendications 1 à 5, caractérisée en ce que chacun des supports de poils (11, 12, 13, 14, 15, 16) présente un trou allongé (21, 22) destiné à recevoir l'arbre à cames (4), l'axe longitudinal du trou allongé (21, 22) croisant approximativement l'axe géométrique de l'axe de support (8, 9) respectivement correspondant.

7. Brosse à dents électrique suivant l'une des revendications 5 et 6, caractérisée en ce que les supports de poils (11, 12, 13, 14, 15, 16) sont conformés de manière identique, indépendamment de leur support sur un des deux axes de support (8, 9).

8. Brosse à dents électrique suivant l'une des revendications 1 à 7, caractérisée en ce que l'arbre à cames (4) peut être déplacé suivant un mouvement de rotation oscillant.

9. Brosse à dents électrique suivant l'une des revendications 1 à 8, caractérisée en ce que les supports de poils (11, 12, 13, 14, 15, 16) sont dotés de faisceaux de poils (17) différents.
